# EUROPEAN PATENT SPECIFICATION

(11) **EP 2 225 950 B1**
(45) Date of publication and mention of the grant of the patent: **03.04.2013**
(21) Application number: 10380018.1
(22) Date of filing: 12.02.2010
(51) Int. Cl.: A23C 1/00, A23K 1/00, A23K 1/16, A23K 1/18, A23L 1/10, A23L 1/36

(54) **Mixed feed composition for birds**
Mischfutterzusammensetzung für Vögel
Composition mixte d'aliments pour oiseaux

(30) Priority: 13.02.2009 ES 200900404
(43) Date of publication of application: 08.09.2010
(73) Proprietor: Legaz Almansa, Mariano, 30320 Funte Alamo Murcia (ES)
(72) Inventor: Legaz Almansa, Mariano, 30320 Funte Alamo Murcia (ES)
(74) Representative: Carvajal y Urquijo, Isabel

(56) References cited:
- WO-A2-01/89315
- DE-A1- 19 524 299
- FR-A1- 2 187 235
- US-A- 3 017 272
- US-A1- 2004 037 918
- Anonymous: "Canary prestige premium VAM" Junglegold 15 August 2007 (2007-08-15), XP002583058 Retrieved from the Internet: URL:http://www.junglegoldlimited.com/canar y_prestige_premium_vam.htm [retrieved on 2010-05-12]
- Shariatmadari et al: "Performance of broiler chickens given whey in the food and/or drinking water" British Poultry Science August 2005 (2005-08), XP002583059 Retrieved from the Internet: URL:http://www.informaworld.com/smpp/conte nt~db=all~content=a723842941 [retrieved on 2010-05-17]

## Description

### Object of the invention

The present invention refers to a mixed feed composition for feeding birds.

### Background of the invention

For feeding pet animals, such as canaries, wild birds, carbohydrates play an important role as a source of energy, and, fortunately, they are normally found in all seeds (millet, canary grass, corn, oats, wheat or rice). On the other hand, fats are also a very important source of energy which also transports vitamins, although their excess results in obese birds and birds with liver alterations. Fats are found in sunflower, hemp, flax, rape or sesame. Vitamins, essential for life, are required in very small amounts for the normal functioning of the organism and are found in fresh fruit and vegetables, eggs, diaries and vitamin supplements. The presence of bristled feathers, slow growth, fingers curved towards the inside, exudations from the nose and eyes are produced by lack of vitamins.

Therefore, feeds for birds generally have to have complete contents of nutrients to guarantee a good development of vital functions and healthy growth, so that feeds need to contain the aforementioned elements in appropriate amounts. WO 01/89315 and US 3 017 272 disclose such fead compositions.

However, there exit feeds which, though complete from the point of view of said nutrients, are not accepted by all birds or birds eat them with great work and difficulty, thus needing an adaptation program to those feeds of about 40 days.

Therefore, it would be necessary a feed containing all carbohydrates, fats, vitamins and minerals and which is eaten by birds without difficulty or adaptation process.

### Description of the invention

According to a first aspect, a feed composition is described to feed birds comprising the following components: peel-free seeds, cereals, minerals, vitamins and re-greased whey.

Optionally, the composition can also comprise one or more of the following elements: water, antifungal agent, vitamin regulator, antioxidants and aminoacids.

The consumption of the composition herein described has the following effects in bird organisms and their vital functioning: excellent intestine and liver balance, solid feces, birds sing more often since this feed offers a constant vitamin supply and satisfies daily needs, and the feathers are bright and shiny. Moreover, birds are stronger and their muscles grow, without increasing their fat content.

### Example of an embodiment of the invention

First, there is a stage of peeling where the peel of all seeds is eliminated, by means of the use of a mill and fans included therein, and some cleaners.

Next, in a mixer, there is a mixing stage in which all peel-free seeds are mixed together, with cereals, minerals and vitamins, water and an antifungal agent are added, in order to mix all products and obtain a homogeneous mix.

After obtaining the mix, there is a stage of granulation in which 2mm-wide and between 0.5 and 3mm-long granules are obtained, according to the cutting size of the granulating machine.

The proportion of the elements of the feed composition (kg weight values), according to this embodiment example, is the following:
- Seeds: canary grass: 35, rape: 10, sunflower: 10, linseed: 6, dwarf elderberry: 5
- Cereals: oats: 6.5, corn: 5, soy: 15
- Vitamins: dough: 5
- Minerals: phosphates: 0.25 and carbonates: 0.25
- Re-greased whey: 2, and also:

- Vitamin regulator: 0.200
- Antioxidant: 0.200 and
- Aminoacids: methionine: 0.210 and lysine: 0.150

The aforementioned feed composition was supplied as granules to the birds and it was observed that they ate this feed very well and without any need for an adaptation process.

It was also observed that the facilities where the birds are kept are cleaner, since no waste is produce nor has the feed any peel.

Therefore, the feed as developed in the present memory and with its possible variations guarantees a single, balanced and waste-free feeding. Thanks to the daily supply of vitamins and minerals, which guarantees the satisfaction of the daily requirements of said elements, the onset of bird diseases is prevented.

## Claims

1. Feed composition for birds **characterized in that** it comprises the following components: peel-free seeds, cereals, minerals, vitamins and fat-enriched whey.

2. Feed composition according to claim 1, **characterized in that** it can also comprise one or more of the following elements: water, antifungal agent, vitamin supplement, antioxidant and aminoacids.

3. Composition according to claims 1 and 2, **characterized in that** it is presented in the form of 2mm-wide and between 0.5 and 3mm-long granules.

## Patentansprüche

1. Futterzusammensetzung für Vögel, **dadurch gekennzeichnet, dass** dieselbe folgende Bestandteile umfasst: schalenfreie Samen, Getreide, Mineralstoffe, Vitamine und fettangereicherte Molke.

2. Futterzusammensetzung nach Anspruch 1, **dadurch gekennzeichnet, dass** dieselbe ferner einen oder mehrere folgender Bestandteile umfassen kann: Wasser, Antimykotikum, Vitaminzusatz, Antioxidationsmittel und Aminosäuren.

3. Zusammensetzung nach Ansprüchen 1 und 2, **dadurch gekennzeichnet, dass** dieselbe in der Form von 2 mm breiten und zwischen 0,5 und 3 mm langen Granulaten präsentiert wird.

## Revendications

1. Composition alimentaire pour oiseaux **caractérisée en ce qu'**elle comprend les composants suivants : des semences décortiquées, des céréales, des minéraux, des vitamines et du sérum riche en matières graisses.

2. Composition alimentaire selon la revendication 1, **caractérisée en ce qu'**elle peut comprendre en outre un ou plusieurs des éléments suivants: de l'eau, des agents fongiques, des compléments vitaminiques, des antioxydants et des aminoacides.

3. Composition selon les revendications 1 et 2, **caractérisée en ce qu'**elle est présentée sous la forme de granulés de 2 mm de largeur et entre 0,5 et 3 mm de longueur.
